# EUROPÄISCHE PATENTSCHRIFT

(11) **EP 0 573 676 B1**
(45) Veröffentlichungstag und Bekanntmachung des Hinweises auf die Patenterteilung: **29.07.1998**
(21) Anmeldenummer: 92108426.5
(22) Anmeldetag: 19.05.1992
(51) Int. Cl.: B44C 1/17, B41M 5/035

(54) **Verwendung eines Trägers mit "release"-Eigenschaft zum Auftragen von Lack und Farbe auf ein Substrat**
Use of a carrier with release properties for the application of lacquer and dyestuff to a substrate
Utilisation d'une bande de support ayant des propriétés de décollage pour l'application de laque et de teinture sur un substrat

(43) Veröffentlichungstag der Anmeldung: 15.12.1993
(73) Patentinhaber: MZI/ M. ZAHER Institut für Oberflächensysteme und Verfahrenstechnik, 26129 Oldenburg (DE); POLYTRANSFER GESELLSCHAFT FÜR DEKORATIVE OBERFLÄCHENTECHNIK POLYMERER WERKSTOFFE mbH, 26125 Oldenburg (DE)
(72) Erfinder: Zaher, Maximilian P., W-2900 Oldenburg (DE); Engelhardt, Joachim, W-2900 Oldenburg (DE)
(74) Vertreter: von Hellfeld, Axel, Dr. Dipl.-Phys.

(56) Entgegenhaltungen:
- EP-A- 0 033 776
- EP-A- 0 255 572
- WO-A-92/01572
- DE-A- 2 740 137
- US-A- 4 058 644

## Beschreibung

Die Erfindung betrifft die Verwendung eines flächigen Trägers mit "release"-Eigenschaft zum Auftragen eines Farbdekors auf bzw. in ein Substrat, wobei eine Lackschicht eingesetzt wird. Außerdem betrifft die Erfindung auch das Aufbringen einer Lackschicht als solcher auf ein Substrat. In Betracht kommen hier vor allem Substrate aus Kunststoff und Holz oder Holzwerkstoffen sowie Mischungen derartiger Substanzen. Darüber hinaus kommen als Substrat aber auch in Betracht keramische Werkstoffe, Gläser und dergleichen.

Aus der US-A-2 721 821 ist ein Verfahren zum Aufbringen eines farbigen Dekors auf ein Substrat aus Polyethylen bekannt, bei dem eine Aufheizung auf 120 bis 185°C erfolgt, wobei ein Sublimationsdruck von einem Farbträger auf das Substrat durchgeführt wird. Die Aufheizung erfolgt mit Infrarotstrahlung, welche durch das Substrat auf den Farbträger gestrahlt wird, d.h. der Farbträger wird auf seiner dem Substrat zugekehrten Seite mittels IR-Strahlung erhitzt. Dabei ist vorgesehen, daß der Farbträger auf seiner nicht von Farbstoffen bedeckten Oberfläche reflektierend für die IR-Strahlung ausgebildet ist, so daß diese Strahlung nur dort absorbiert wird, wo Farbe aufgetragen ist.

Auch aus der DE-A-24 38 723 ist ein Verfahren bekannt, bei dem Farbstoffe derart auf ein Substrat übertragen werden, daß ein Farbträger auf das Substrat gelegt und die Farbe durch Erhitzen des Trägers mit Infrarotstrahlung mittels Sublimationsdruck auf das Substrat übertragen wird.

Die GB-A-1 107 401 beschreibt ein Verfahren zum farbigen Bedrucken von Kunststoffen, bei dem eine Aufheizung des Kunststoffes in einem erhitzten Glycerol-Bad auf 175 bis 180°C erfolgt. Dabei erfolgt eine Gelierung der Oberfläche des Kunststoffes.

Aus der EP 0 098 506 A2 sind ein Verfahren und eine Vorrichtung zum Erzeugen von permanenten Bildern auf Substraten bekannt, bei denen ein Träger mit Farbstoff zwischen dem Substrat und einer geheizten Matrix angeordnet wird, welche erhabene Abschnitte aufweist, deren Form dem zu übertragenden Bild entspricht. Nachdem mittels dieser erhitzten Matrix die Übertragung der Farbstoffe auf das Substrat erfolgt ist, wird das Substrat erhitzt, damit der Farbstoff aus einer Tinte in das Substrat diffundiert.

Die GB 2 127 747 A1 beschreibt ein Transfer-Druckverfahren, bei dem eine Positionierung der Transfer-Druckpartner mittels elektrostatischer Aufladung erfolgt.

Weiterhin sind Verfahren zum Auftragen von Dekors aus Farbstoffen auf Kunststoffsubstrate aus der DE 37 08 855 C1 und der DE 39 04 424 C1 bekannt.

Aus den DE-Patenten 17 71 812, 23 37 798, 24 36 783 sowie aus der 24 58 669 ist es bekannt, Textilstoffe mit dem sogenannten Transferdruckverfahren zu bedrucken. Dabei wird ein Farbträger (auch Hilfsträger genannt) mit Druckbildern (Dekoren) aus Sublimationsdrucktinten bedruckt. Der Farbträger (Hilfsträger) kann insbesondere aus Papier bestehen. Der Druck erfolgt z.B. mittels Offset- oder Rotationsdruckverfahren. Die Druckbilder werden durch Sublimation vom Farbträger auf den farbig zu dekorierenden Textilstoff übertragen (sogenannter Umdruck).

Die genannten Drucktinten werden aus sublimierbaren Dispersionsfarbstoffen unter Verwendung von Bindemitteln und Oxidationsadditiven hergestellt. Die bedruckten Farbträger (auch Transferpapiere genannt) werden beim Stand der Technik mit der farbig bedruckten Seite auf die zu bedruckende Textilseite gelegt und mittels einer auf 170 bis 220°C erhitzten Druckplatte (im Taktverfahren) erhitzt. Sobald die Temperatur von ca. 170 bis 220°C die Farbstoffe erreicht, sublimieren diese in die aus Kunststoffasern hergestellten Textilien hinein.

Ein anderes bekanntes Verfahren (EP-A 0 014 615), das in erster Linie zum Dekorieren von Brillengestellen vorgesehen ist, wird in der Weise durchgeführt, daß bei jedem Arbeitszyklus ein Brillengestell mit seiner zu dekorierenden Fläche nach oben weisend auf einer Unterlage abgelegt wird, die innerhalb einer Vakuumkammer angeordnet und mittels einer Kolbenzylindereinheit auf- und abbeweglich ist. Die Vakuumkammer hat zum Einbringen des Brillengestells eine seitliche Öffnung, die mit einer Tür verschließbar ist. An ihrer Oberseite weist die Vakuumkammer einen waagerechten, ortsfesten Rahmen auf, der mit einem über ihm angeordneten, ebenfalls waagerechten, aber auf- und abbeweglichen Rahmen einen Schlitz begrenzt. Durch den Schlitz wird eine Trägerfolie hindurchgeführt, die von einer Haspel abgerollt wird und an ihrer Unterseite mit dem Dekor versehen ist, das auf das Brillengestell aufgetragen werden soll. Das Dekor ist beispielsweise als Mehrfarbendruck oder als Abziehbild auf die Trägerfolie aufgebracht worden und besteht aus Farben, die bei einer Temperatur unterhalb der Zerstörungstemperatur der Trägerfolie sublimierbar sind. Sobald ein Brillengestell in die Vakuumkammer eingebracht und deren Tür verschlossen worden ist, wird der obere Rahmen abgesenkt, so daß er die Trägerfolie zwischen sich und dem unteren Rahmen einklemmt und die Vakuumkammer dadurch dicht verschlossen wird und evakuiert werden kann. Die Trägerfolie wird mittels einer über dem oberen Rahmen angeordneten Heizvorrichtung auf die Sublimationstemperatur des Dekors erhitzt und daraufhin das Brillengestell mittels seiner innerhalb der Vakuumkammer heb- und senkbaren Unterlage, auf der es abgelegt worden ist, nach oben bewegt und gegen die Trägerfolie gedrückt. Das Vakuum bewirkt, daß die Trägerfolie sich dicht an die zu dekorierenden Flächen an der Vorderseite und in seitlichen Bereichen des Brillengestells anschmiegt. Dieser Zustand wird für eine Zeitspanne aufrechterhalten, die für einen Übergang der das Dekor bildenden Farben von der Trägerfolie weg in die Struktur des Werkstoffes des Brillengestells hinein ausreicht. Anschließend wird das Vakuum aufgehoben, das Brillengestell abgesenkt und dadurch von der Trägerfolie getrennt und schließlich der Vakuumkammer entnommen.

Bei diesem bekannten Verfahren wird die Trägerfolie in einzelnen Bereichen stark gedehnt, damit sie sich ausreichend an das Brillengestell anschmiegt. Dabei ist es unvermeidlich, daß das Dekor in den besonders stark gedehnten Bereichen der Trägerfolie verzerrt wird. Die Verzerrungen lassen sich bis zu einem gewissen Grad dadurch ausgleichen, daß von vorne herein ein entsprechend korrigiertes Dekor auf die Trägerfolie aufgebracht wird. Im übrigen machen sich Verzerrungen bei Gegenständen wie Brillengestellen, deren zu dekorierende Flächen verhältnismäßig schmal sind, kaum bemerkbar. Anders ist es jedoch bei Gegenständen, die großflächig dekoriert werden sollen. Bei solchen Gegenständen lassen sich störend auffallende Verzerrungen des Dekors nicht immer vermeiden, wenn das Dekor nach dem bekannten Verfahren aufgetragen worden sind. Außerdem nimmt mit zunehmender Größe der zu dekorierenden Fläche die Gefahr zu, daß das Dekor durch Lufteinschlüsse beeinträchtigt wird.

Bei einem anderen bekannten Verfahren zum Auftragen von Dekors auf Gegenstände (DE-A-32 28 096) werden die Gegenstände, beispielsweise Blechdosen, zunächst durch eine Beschichtungsanlage geführt, die auf der Außenseite der Gegenstände eine Schicht aus farbstoffaffinem, migrationsverhinderndem Kunststoff aufbringt. Nach chemischen und physikalischen Trocknen dieses Überzuges werden die beschichteten Gegenstände einer Etikettiermaschine zugeführt, in der Dekorträger in Form von bedruckten Banderolen von einem Stapel oder endlosen Streifen abgenommen, um je einen Gegenstand gelegt und mit einem Klebstreifen, Leimstrich, elektrostatischen Feld oder dergleichen fixiert werden. Daraufhin werden die Gegenstände, beispielsweise mittels Heißluft, auf eine Temperatur von 200° bis 350°C, vorzugsweise 250° bis 300°C erhitzt. Bei diesen Temperaturen, die einen extremen Hitzeschock erzeugen, verdunstet in den Banderolen enthaltenes Wasser schlagartig, so daß jede Banderole in einem Bruchteil einer Sekunde auf den zugehörigen Gegenstand aufgeschrumpf wird und einen für den Übergang des Dekors von der Banderole auf den Gegenstand erforderlichen Druck autogen erzeugt. Beim weiteren Erhitzen sublimieren dann die Farbstoffe, die das Dekor bilden, in den darunterliegenden Kunststoffüberzug.

Bei diesem Verfahren ist es von entscheidender Bedeutung, daß die beim Aufschrumpfen einer Banderole unvermeidliche Relativbewegung gegenüber dem zugehörigen Gegenstand abgeschlossen ist, ehe die Farbstoffe, die das Dekor bilden, so weit erhitzt sind, daß ihre Migration in die Kunststoffschicht hinein beginnt. Gelingt es nicht, diese schwierige Bedingung einzuhalten, dann muß damit gerechnet werden, daß zumindest Teile des Dekors auf dem Gegenstand verwischt werden.

Aus der US 4 178 782 ist eine Vorrichtung zum Bedrucken einer Textilbahn mit sublimierbarem Farbstoff bekannt, der auf einer Trägerfolie zugeführt wird. Die Vorrichtung hat eine drehantreibbare, von innen beheizbare Trommel, um die zuunterst die Trägerfolie mit radial nach außen gekehrter Farbstoffschicht und darüber die zu bedruckende Textilbahn und über dieser ein über Rollen geführter endloser Anpreßgurt aus Metallgewebe laufen. Der auf diese Weise umschlungene Bereich der Trommel kann von einer Haube abgedeckt sein, innerhalb derer ein Unterdruck aufrechterhalten wird. Auf diese Weise wird beim Sublimieren der Farbe freiwerdendes Gas durch die zu bedruckende Textilbahn und den daraufliegenden Anpreßgurt aus Metallgewebe hindurch abgesaugt. Die vom Anpreßgurt auf die Textilbahn ausgeübten Anpreßkräfte werden ausschließlich durch die mechanische Spannung des Anpreßgurts erzeugt und durch den Unterdruck innerhalb der Haube etwas vermindert.

Aus der DE 26 42 350 C1 ist der Versuch bekannt geworden, im Transferdruckverfahren, welches zuvor bei Textilstoffen mit Erfolg angewandt worden war, auch bestimmte Kunststofferzeugnisse zu bedrucken, welche die in Rede stehenden sublimierbaren Farbstoffe schlecht annehmen. Man hat dort versucht, solche Körper mit thermoplastischen Folien zu beschichten, welche die Farbstoffe aufnehmen und sodann versucht, die Folien mit dem oben erläuterten Transferdruckverfahren zu bedrucken. Das Verfahren hat sich aber nicht bewährt, insbesondere weil die Migrationsbeständigkeit der Farbstoffe (also die Ortsfestigkeit der Farbstoffe nach dem Transferdruck) nur bei mittel- bis hochmolekularen Farbstoffen gewährleistet war (bei Molekulargewichten zwischen 300 und 1 000). Man hat zum Sublimieren Temperaturen von über 180°C bzw. 200 bis 220°C für eine Zeitspanne von mindestens 25 Sekunden angewandt. Bei diesen relativ hohen Temperaturen verschmelzen aber die meisten thermoplastischen Folien oder sie werden so weich, daß die beim Transferdruck verwendeten Farbträger (Papier etc.) kleben bleiben oder die Oberflächen der Folien so beschädigen, daß das Produkt nicht den ästhetischen Anforderungen genügte. Auch die für eine gute Bildwiedergabe erforderliche Migrationsbeständigkeit der Farbstoffe wurde nicht erreicht.

Geringe Probleme traten im Sublimationsdruck-Transferverfahren im Stand der Technik bei Einsatz von duroplastischen Folien und Lacken auf (FR-A-2 230 794, DE-A 24 24 949, GB-A-1 517 832).

Wegen der umfangreichen Anwendung thermoplastischer Folien und Platten, die mit einer Thermoverformung in dreidimensionale Körper, wie z.B. Bauelemente für den Innenausbau, Möbelteile (insbesondere Fronten), Haushaltsgeräte, Büromaschinen, Leuchtkörper, Autoformteile etc., geformt werden können, besteht seit langem ein Bedarf an einer Möglichkeit, thermoplastische Substrate in guter Qualität mit farbigen Dekors versehen zu können.

In der EP 0 014 901 wird ein Versuch beschrieben, konstante, nachvollziehbare und beständige Transferdruckergebnisse dadurch zu erzielen, daß die Molekulargewichte der sublimierbaren Dispersionsfarbstoffe, die angewandten Temperaturen und die Zusammensetzung und Beschaffenheit der Kunststoffsubstrate näher spezifiziert sind. Man ist dort zu der Erkenntnis gelangt, daß eine Erhitzung auf Temperaturen von 220°C und mehr für die Anwendung des Transferdruckverfahrens auf Kunststoffe erforderlich sein soll. Dadurch werden eine Vielzahl von thermoplastischen Kunststoffen ausgeschlossen. Das Verfahren blieb auf bestimmte duroplastische Kunststoffbeschichtungen und bestimmte Substrate aus anorganischen Werkstoffen beschränkt.

Der Stand der Technik lehrt als Vorurteil auch, daß es beim Sublimationsdruck wesentlich auf das Molekulargewicht der verwendeten Farbstoffe ankommt. Die vorstehend genannte EP 0 014 901 lehrt die Verwendung von hochmolekularen Dispersionsfarbstoffen mit Molekulargewichten zwischen 300 und 1000, insbesondere mit Blick auf die geforderte Migrationsbeständigkeit.

Die eingangs bereits genannten deutschen Patentschriften 37 08 855 und 39 04 424 bringen insofern einen Fortschritt, als sie beim Sublimationsdruck von der Verwendung von erhitzten Druckplatten oder erhitzten Zylindern abgehen und stattdessen eine Erhitzung mit Wärmestrahlung (Infrarotstrahlung) vorschlagen. Auf Einzelheiten der verwendeten Materialien sowie der Sublimationstemperaturen geht dieser Stand der Technik nicht ein.

Die EP-A-0 455 849 beschreibt ein Verfahren zum Auf- und Einbringen von Farbstoffen auf bzw. in ein Kunststoff aufweisendes Substrat, bei dem Infrarotstrahlung inhomogen in Abhängigkeit von der Farbverteilung des Dekors auf einen Farbträger gerichtet wird, so daß die Farben mittels Sublimations-Transfer auf das Substrat überführt werden.

Der Sublimationsdruck ist aufwendig und sehr empfindlich hinsichtlich der Einhaltung der Verfahrensparameter, wenn gute Ergebnisse erzielt werden sollen.

Aus der WO-A-92/01572 ist eine Heißprägefolie bekannt, mit der eine Dekorschicht mittels einer Kleberschicht auf einem Substrat verklebt wird, wobei ein Kleber eine Komponente enthält, die zur Verbesserung der Haftung der Dekorschicht auf dem Substrat erst nach Aufbringung der Dekorschicht auf das Substrat vollständig vernetzt.

Der Erfindung liegt die Aufgabe zugrunde, ein Verfahren anzugeben, gemäß dem in einfacher Weise ein Farbdekor mit guten qualitativen Ergebnissen auf ein Substrat aufbringbar ist. Das Produkt soll hinsichtlich seiner ästhetischen und mechanischen Eigenschaften hohen Ansprüchen genügen.

Mehrere erfindungsgemäße Varianten zur Lösung dieser Aufgabe sind in den Patentansprüchen 1 bis 4 beschrieben. Die Erfindung beruht auf der Erkenntnis, daß die Anwendung einer Kombination aus einem Träger mit "release"-Eigenschaften und gezielter Teilvernetzung von Lackschichten zu sehr guten Ergebnissen führt.

Sogenannte "Transferpapiere" mit "release"-Eigenschaften sind als solches bekannt. Auch Kunststoffolien mit solchen "release"-Eigenschaften sind bekannt. Das Wort "release" bedeutet dabei, daß der Träger so an seiner Oberfläche gestaltet bzw. präpariert ist, daß er unter bestimmten Bedingungen aufgetragene Farbschichten oder Lackschichten an ein anderes Substrat abgibt. Mit anderen Worten: auf einen Träger mit "release"-Eigenschaften aufgebrachte Farbdekors oder Lacke können unter bestimmten Bedingungen von diesem Träger "abgepellt" und auf ein anderes Substrat übertragen werden.

Gemäß einem ersten erfindungsgemäßen Verfahren sind folgende Schritte vorgesehen:
a) ein Farbdekor wird auf einen flächigen Träger mit "release"-Eigenschaft aufgebracht,
b) über das auf den Träger aufgebrachte Farbdekor wird ein Lack aufgetragen,
c) der aufgetragene Lack wird teilvernetzt,
d) unter Druck und/oder erhöhter Temperatur wird der teilvernetzte Lack mitsamt dem Farbdekor vom Träger auf das Substrat so übertragen, daß der Lack unter dem Farbdekor auf dem Substrat aufliegt und der Träger vom Farbdekor entfernt ist, und
e) es wird eine weitere Vernetzung des Lackes auf dem Substrat durchgeführt.

Gemäß einer Variante eines erfindungsgemäßen Verfahrens unter Verwendung von Trägern mit "release"-Eigenschaften und teilvernetzten Lacken ist vorgesehen:
a) Lack wird auf einen flächigen Träger mit "release"-Eigenschaft aufgetragen,
b) der aufgetragene Lack wird auf dem Träger teilvernetzt,
c) der teilvernetzte Lack wird vom Träger auf das Substrat übertragen, gegebenenfalls unter Druck und/oder erhöhter Temperatur,
d) der auf das Substrat übertragene Lack wird vollvernetzt.

Eine andere Variante des erfindungsgemäßen Verfahrens führt hinsichtlich der Ästhetik des Farbdekors und der mechanischen Stabilität der Oberfläche zu einer weiteren Verbesserung und sieht vor:
a) eine erste Lackschicht wird auf einen flächigen Träger mit "release"-Eigenschaft aufgetragen,
b) die erste Lackschicht wird teilvernetzt,
c) auf die teilvernetzte erste Lackschicht wird ein Farbdekor aufgebracht,
d) auf das Farbdekor wird eine zweite Lackschicht aufgetragen und ebenfalls teilvernetzt,
e) unter Druck und/oder erhöhter Temperatur werden die teilvernetzten Lackschichten mitsamt dem Farbdekor vom Träger auf das Substrat überführt,
f) auf dem Substrat werden die ersten und zweiten Lackschichten vollvernetzt.

Eine sehr gute ästhetische Wirkung dahingehend, daß eine größere Tiefe des Farbdekors erreicht wird (also ein optischer Eindruck derart, daß die Oberfläche transparenter ist), wird dann erzielt, wenn die einzelnen Arbeitsschritte in folgender Reihenfolge durchgeführt werden:
a) ein Lack wird auf einen flächigen Träger mit "release"-Eigenschaft aufgetragen,
b) der Lack wird teilvernetzt,
c) auf den teilvernetzten Lack wird Farbdekor aufgebracht,
d) unter Druck und/oder erhöhter Temperatur wird der teilvernetzte Lack mitsamt dem Farbdekor vom Träger auf das Substrat so übertragen, daß das Farbdekor unter dem Lack auf dem Substrat liegt,
e) es wird eine weitere Vernetzung des Lackes durchgeführt.

Als Substrat kommt in Betracht insbesondere ein Kunststoffmaterial, vorzugsweise ein Thermoplast, dessen farbige Dekorierung im Stand der Technik immer noch Probleme bereitet hat. Als Substrat können aber auch Holzflächen oder Oberflächen von Holzwerkstoffen dienen.

Gemäß einer bevorzugten Ausgestaltung der Erfindung ist vorgesehen, daß die Übertragung des teilvernetzten Lackes und gegebenenfalls des Farbdekors unter Druck und erhöhter Temperatur vom Träger auf das Substrat mittels eines Kalanders durchgeführt wird, der insbesondere zumindest eine Walze aus elastischem Material aufweist. Hiermit sind große Produktionsleistungen mit relativ geringem Aufwand möglich.

Dabei werden bevorzugt das Substrat und der Träger synchron durch den Kalander geführt.

Gemäß einer bevorzugten Ausgestaltung der Erfindung ist bei einem Verfahren, bei dem eine erste Lackschicht, darüber ein Farbdekor und darüber eine zweite Lackschicht auf dem Träger aufgebracht werden, vorgesehen, daß die erste Lackschicht aus einem Klarlack und die zweite Lackschicht aus einem weiß gefärbten Lack bestehen. Dies ergibt einen sehr reizvollen optischen Eindruck bei hoher mechanischer Qualität der Oberfläche.

Die Erfindung lehrt auch, wie Substrate im Bereich ihrer Kanten farbig dekoriert bzw. lackiert werden können. Dabei wird in einem einzigen Arbeitsschritt sowohl die Oberfläche des Substrates dekoriert bzw. lackiert als auch die Kanten des Substrates. Hierzu dient ein Silikontuch (oder ein Tuch mit ähnlichen elastischen Eigenschaften), das mittels Vakuum so über das Substrat gezogen wird, daß es zwischen sich und der Substratoberfläche den Träger einklemmt, wobei auch die Kantenflächen des Substrates erfaßt werden.

Die Erfindung umfaßt auch die Verwendung der offenbarten Gegenstände und Materialien für die jeweils angegebenen Zwecke.

Nachfolgend werden Ausführungsbeispiele der Erfindung anhand der Zeichnung näher beschrieben. Es zeigen:
- Fig.1 - 4: verschiedene Varianten der Aufbringung eines Farbdekors bzw. Lackes mittels eines Trägers mit "release"-Eigenschaft auf ein Substrat;
- Fig.5: schematisch eine Vorrichtung zur Durchführung eines erfindungsgemäßen Verfahrens; und
- Fig.6: schematisch die Verwendung eines Silikon-Tuches zur Farb- bzw. Lackbeschichtung eines Substrates einschließlich des Kantenbereiches.

In den Figuren sind einander entsprechende Bauteile mit gleichen Bezugszeichen versehen.

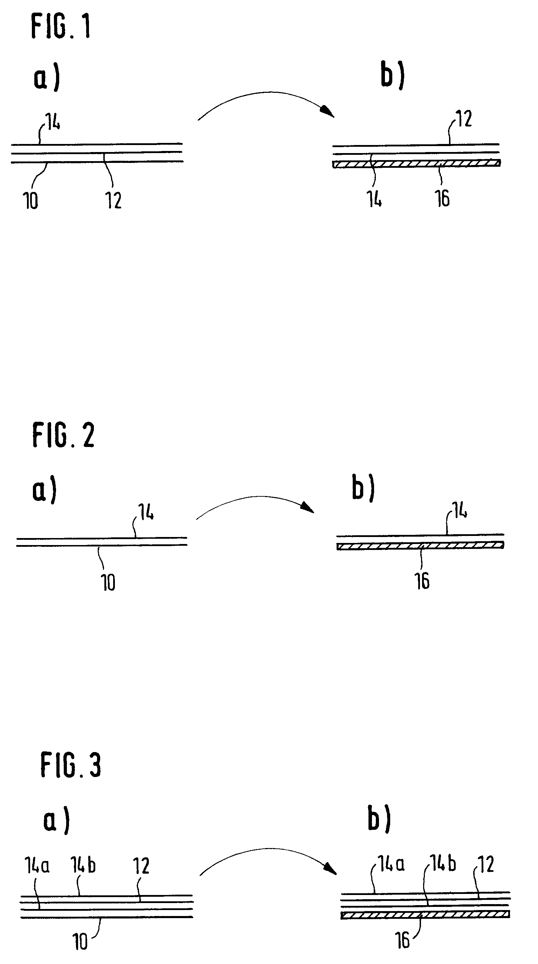

Fig.1a zeigt einen Träger 10 mit sogenannten "release"-Eigenschaften. Träger mit "release"-Eigenschaften sind als solches bekannt, beispielsweise aus der keramischen Technik, um Farbdekore in der Art von "Abziehbildern" auf ein Substrat zu bringen.

Fig.1 zeigt eine erste Variante des erfindungsgemäßen Verfahrens.

Auf einen Träger 10 mit "release"-Eigenschaft wird zunächst ein Farbdekor aufgebracht. Diese Aufbringung des Farbdekors kann in herkömmlicher Weise erfolgen, z.B. durch Offset-Druck und dergleichen. Nachdem das Farbdekor (also z.B. ein farbiges Motiv oder auch eine homogene Einfärbung) auf den Träger 10 aufgebracht worden ist, wird Lack 14 über das Farbdekor aufgetragen.

Der Farbstoff ist ein diffundierbarer Dispersionsfarbstoff, insbesondere nieder- bis mittelmolekular.

Als Lacke dienen insbesondere Acryllack, Polyurethanlack, Polyesterlack und dergleichen. Insbesondere werden wasserlösliche Lacke verwendet, nicht aber Lacke mit Lösungsmittel.

Nachdem die Anordnung gemäß Fig.1a mit einem Träger 10, daraufliegendem Farbdekor 12 und darübergeschichtetem Lack 14 hergestellt ist, wird der Lack teilvernetzt. Der Begriff "teilvernetzt" bedeutet, daß der Lack noch nicht vollständig einer Vernetzung unterzogen wird, sondern nur teilweise, so daß später noch eine vollständige Vernetzung ermöglicht ist. Die Vernetzung von Lacken ist dem Fachmann als solches ebenfalls bekannt. Eine Vernetzung kann z.B. mit erhöhten Temperaturen, insbesondere mittels Infrarotstrahlern durchgeführt werden. Im allgemeinen werden für eine Vernetzung sogenannte Härter herangezogen. Es stehen unterschiedliche Härter zur Verfügung, die verschiedene Vernetzungstemperaturen bedingen. Insbesondere existieren Härter, die bei relativ geringen Temperaturen bereits eine Teilvernetzung durchführen, während die Vollvernetzung des Lackes erst bei relativ hohen Temperaturen erfolgt.

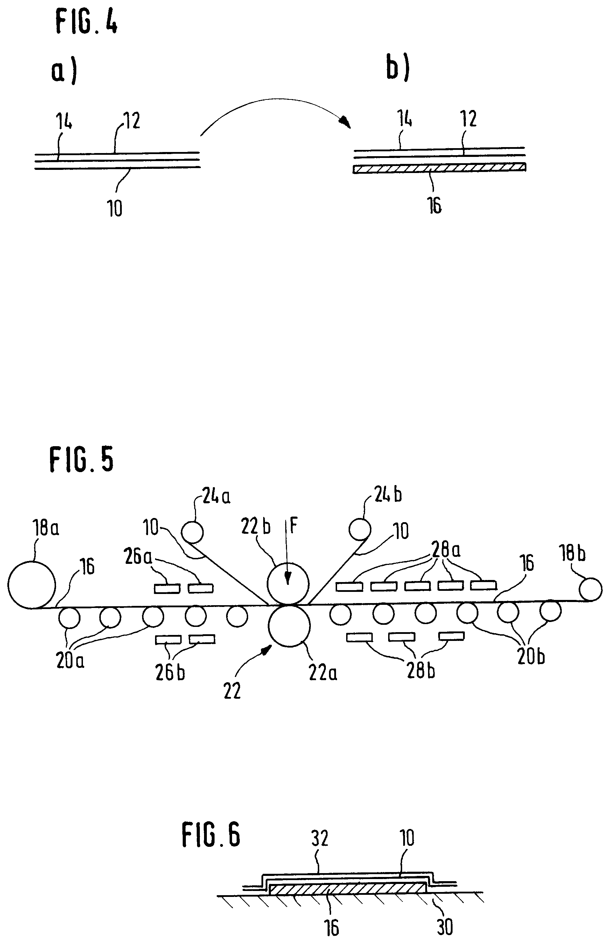

Nachdem eine Teilvernetzung des Lackes 14 gemäß Fig.1a durchgeführt ist, erfolgt ein Transfer des Lackes 14 und des Farbdekors 12 vom Träger 10 auf das letztlich zu dekorierende Substrat 16 gemäß Fig.1b. Der Transfer wird weiter unten anhand der Fig.5 näher beschrieben. Beispielsweise kann er erfolgen mittels eines sogenannten Kalanders.

Aufgrund des Transfers kommt die Lackschicht 14 als unterstes auf dem Substrat 16 zu liegen, während das Farbdekor 12 außen ist (Fig.1b). Die Teilvernetzung des Lackes hat den Vorteil, daß der Lack 14 einschließlich des Farbdekors 12 in einfacher Weise auf das Substrat 16 überführbar ist. Der Lack bindet die Farbe, d.h. die Farbe haftet auf dem Lack. Der Lack selbst ist in einfacher Weise vom Träger 10 abziehbar.

Beim Abziehen des Lackes vom Träger, also beim Transfer von Lackschicht 14 und Farbschicht 12 auf das Substrat 16 muß im wesentlichen alle Farbe mitgenommen werden. Dabei treten Probleme auf: Bei der Teilvernetzung des Lackes soll keine Farbe in den Träger 10 diffundieren. Deshalb muß der Lack so gewählt werden, daß seine Vernetzungstempertur geringer ist als die Erweichungstemperatur des Trägers 10, falls für den Träger 10 ein Kunststoffmaterial verwendet wird. Andererseits haben aber gute Lacke die Eigenschaft, daß zur Vernetzung relativ hohe Temperaturen verwendet werden. Solche hohen Temperaturen bedingen aber Probleme hinsichtlich der Diffusion der Farbe in den Träger.

Die Lösung dieser widersprüchlichen Bedingungen besteht darin, nicht einen Härter für die Vernetzung des Lackes zu verwenden, der eine geringe Vernetzungstemperatur aufweist, sondern daß ein sogenannter "blockierter Härter" verwendet wird, bei dem bereits bei relativ geringen Temperaturen eine Teilvernetzung des Lackes erfolgt, während die vollständige Vernetzung erst bei relativ hohen Temperaturen geschieht. Derartige "blockierte Härter" sind als solche dem Fachmann bekannt.

Die Begriffe "tiefe Temperaturen und hohe Temperaturen" beziehen sich auf die verwendeten Materialien und Träger, also insbesondere die Erweichungstemperatur des Trägers und die Diffusionseigenschaften der Farbe.

Nachdem eine Teilvernetzung des Systems gemäß Fig.1a durchgeführt ist, wird in der weiter unten noch näher beschriebenen Weise ein Transfer von Lack und Farbe auf das Substrat 16 gemäß Fig.1b durchgeführt und anschließend erfolgt eine Vollvernetzung des Lackes. Beim Ausführungsbeispiel gemäß Fig.1b liegt die Farbe 12 oben. Bei der Vollvernetzung bei erhöhten Temperaturen diffundiert die Farbe in die Lackschicht 14 und darüber hinaus dringt die Farbe 12 einschließlich des Lackes in das Substrat 16 ein. Dies gilt insbesondere dann, wenn für das Substrat 16 Holz, ein Holzwerkstoff oder auch Kunststoff, wie ein Thermoplast, verwendet wird. Die in Rede stehenden Thermoplasten sind in der eingangs genannten EP 0 455 849 A1 genannt.

Die vollständige Vernetzung des Lackes (ebenso auch die Teilvernetzung zuvor) wird bevorzugt mittels Infrarotheizung durchgeführt. Dabei erfolgt eine sogenannte Imprägnierung des Substrates 16 derart, daß der Lack relativ weit in das Substrat eindringt. Beispielsweise wurde gemessen, daß der Lack (und auch die Farbstoffmoleküle) 250 µm in ein Kunststoff-Substrat eindringen, während bei einem Holzsubstrat die Eindringtiefe etwa 80 µm beträgt. Diese Imprägnierung des Substrates ist höchst erwünscht, da sie sowohl die ästhetischen Eigenschaften des Dekors verbessert als auch die mechanische Stabilität der Oberfläche.

Fig.2 zeigt eine Abwandlung des zuvor beschriebenen Ausführungsbeispiels. Die Variante gemäß Fig.2 betrifft einen reinen Lackauftrag auf ein Substrat, insbesondere aus Holz oder einem Holzwerkstoff. Der Stand der Technik hinsichtlich der Aufbringung von Lack auf Holz ist äußerst aufwendig und erfordert eine Vielzahl von Verfahrensschritten. Bringt man nasse Lacke auf Holz auf, dann kommt es beim Vernetzen des Lackes zum sogenannten Aufstehen von Holz-Haaren, weshalb aufwendige Schleifarbeiten und vielschichtiges Lackauftragen erforderlich sind. Auch ist es erforderlich, zuvor das Holz mit einem Füllstoff zu sättigen, damit nicht zuviel Lack verbraucht wird.

Das in Fig.2 skizzierte Verfahren ermöglicht eine starke Vereinfachung des Aufbringens von Lack auf Holz oder Holzwerkstoffe mit erstklassischen ästhetischen und mechanischen Ergebnissen.

Gemäß Fig.2a wird zunächst auf einen Träger 10 mit "release"-Eigenschaft eine Lackschicht 14 aufgebracht. Der Lack 14 wird sodann in der oben beschriebenen Weise teilvernetzt und sodann wird der Lack 14 auf das Substrat 16 (hier aus Holz oder einem Holzwerkstoff) übertragen, wie weiter unten näher beschrieben ist. Beispielsweise kann die Übertragung mit einem Kalander durchgeführt werden, insbesondere unter Verwendung von gummierten Druckwalzen.

Das derart gebildete System gemäß Fig.2b, bestehend aus dem Substrat 16 und der darauf liegenden, teilvernetzten Lackschicht 14, wird sodann einer Vollvernetzung unterzogen. Hinsichtlich der verwendeten Lacke gilt das oben Gesagte.

Das vorstehend beschriebene Verfahren zum Aufbringen von Lack auf Holz kann wiederholt werden, d.h. es können in der beschriebenen Weise mehrere Schichten übereinander aufgetragen werden, um das Ergebnis noch weiter zu verbessern. Insbesondere ist es möglich, zuerst eine farbige Lackschicht aufzubringen und sodann darüber eine Klarlack-Schicht, um eine gewisse Tiefenwirkung der Oberfläche zu erreichen.

Dabei werden zum Färben des Lackes diffundierbare Farbstoffe verwendet, also Farbstoffe, die in der Lage sind, in das Kunststoffsubstrat zu diffundieren (vgl. EP-A 0 455 849). Vorzugsweise werden Farbstoffe mit Molekulargewichten kleiner oder gleich 800 verwendet. 3 bis 5 g Farbstoff pro Liter Lack ergeben gute Ergebnisse.

Dabei werden bevorzugt keine UV-vernetzenden Lacke verwendet und auch keine Lacke, die durch Elektronenstrahl härtbar sind.

Vielmehr erfolgt die Teilvernetzung und auch die Vollvernetzung der Lacke bevorzugt durch Infrarotstrahlung oder auch Heißluft.

Die Fig.3 beschreibt eine Variante des erfindungsgemäßen Verfahrens, bei der zunächst auf einen Träger 10 mit "release"-Eigenschaft eine erste Lackschicht 14a aufgebracht wird, die zunächst einer Teilvernetzung unterzogen wird. Sodann wird auf die Lackschicht 14a ein Farbdekor 12 aufgebracht und über das Farbdekor 12 wird dann eine zweite Lackschicht 14b aufgebracht, die dann ebenfalls einer Teilvernetzung unterzogen wird.

Sodann erfolgt ein Transfer vom Träger 10 auf das letztlich zu dekorierende Substrat 16 und sodann werden die beiden Lackschichten 14a, 14b vollvernetzt, wobei eine Imprägnierung des Substrates 16 mit Lackmolekülen bzw. Farbmolekülen erfolgt.

Fig.4 beschreibt eine Abwandlung des Ausführungsbeispiels gemäß Fig.1, bei der auf einen Träger 10 mit "release"-Eigenschaft zunächst eine Lackschicht 14 aufgebracht wird, die sodann einer Teilvernetzung unterzogen wird. Auf die teilvernetzte Lackschicht 14 wird dann das Farbdekor in der oben beschriebenen Weise aufgebracht. Sodann erfolgt ein Transfer vom Träger 10 auf das Substrat 16, wobei die Lackschicht 14 dann oben, d.h. über der Farbschicht 12 zu liegen kommt. Sodann erfolgt eine Vollvernetzung des Lackes auf dem Substrat 16.

Das oben anhand Fig.3 beschriebene Verfahren kann dahingehend abgewandelt werden, daß zunächst auf dem Träger 10 mit "release"-Eigenschaft ein Klarlack aufgetragen und teilvernetzt wird. Über die teilvernetzte Klarlackschicht wird dann das Farbdekor aufgedruckt und über das Farbdekor wird dann ein Lack aufgetragen, der sodann ebenfalls teilvernetzt wird. Die oberste, vorstehend genannte Lackschicht ist dabei weiß eingefärbt. Nach der Teilvernetzung der beiden Lackschichten erfolgt dann der Transfer auf das Substrat, so daß die weiße Lackschicht zu unterst auf dem Substrat zu liegen kommt. Anschließend erfolgt eine Vollvernetzung aller Lackschichten und es entsteht ein hochwertiges Produkt mit großer Tiefenwirkung und guten mechanischen Eigenschaften der Oberfläche.

Fig.5 zeigt eine Vorrichtung zur Durchführung des Verfahrens gemäß den Fig.1 bis 4.

Von einer Substrat-Abwickelrolle 18a wird eine Kunststoffbahn 16 (oder auch eine holzhaltige Folie, Furnier etc.) als Substrat abgewickelt und nach Durchführung des Verfahrens auf der anderen Seite auf einer Substrat-Aufwickelrolle 18b aufgewickelt. Über ein Zuführband 20a wird das zu lackierende bzw. farbig dekorierende Substrat 16 einem Kalander 22 zugeführt. Der Kalander hat hier zwei Walzen 22a, 22b, die auf ihrer Oberfläche gummiert sind, um eine hohe Elastizität zu haben. Die Andrückkraft ist mit dem Pfeil F angedeutet. Synchron zur Bewegung des Substrates 16 wird der Träger 10 mit "release"-Eigenschaft von einer Trägerabwickelrolle 24a abgewickelt, durch den Kalander 22 geführt und sodann nach Überführung des Farbdekors bzw. Lackes auf das Substrat wieder auf eine Trägeraufwickelrolle 24b aufgewickelt.

Der Lack und gegebenenfalls das Farbdekor sind somit auf derjenigen Seite des Trägers 10 angeordnet, die dem Substrat 16 im Kalander 22 zugekehrt ist. Der Kalander erzeugt den erforderlichen Druck und auch die für den Transfer gewünschten Temperaturen. Dies ist als solches in der Kalander-Technik bekannt. Beispielsweise können die Walzen direkt temperiert werden.

Eingangsseitig des Kalanders 22 erfolgt eine Vorheizung mittels Vorheizungseinrichtungen 26a, 26b. Diese Vorheizeinrichtungen bewirken die oben erläuterte Teilvernetzung der Lacke vor Eintritt in den Kalander 22.

Nach Überführung des Farbdekors und des Lackes vom Träger 10 auf das Substrat 16 im Kalander 22 erfolgt ausgangsseitig (in Fig.5 erfolgt also die Bewegung von links nach rechts) eine Vollvernetzung des Lackes mittels der Hauptheizungseinrichtungen 28a, 28b. Wie dargestellt ist, sind die Heizeinrichtungen (auch der Vorheizung) jeweils oben und unten (beidseitig) des Substrates 16 angeordnet. Sodann wird das fertige Produkt auf der Aufwickelrolle 18b aufgewickelt und ist für weitere Verarbeitungen geeignet.

Fig.6 zeigt eine Ausgestaltung der Erfindung dahingehend, daß auch Kantenfläche des Substrates 16 dekoriert bzw. lackiert werden können. Hierzu wird das Substrat 16 auf einen Tisch 30 gelegt, der eine Vielzahl von Löchern aufweist, die an eine Vakuum-Quelle anschließbar sind. Es entsteht also ein Saugeffekt auf dem Tisch 30 (vgl. EP-A 0 455 849). Der Träger 10 mit "release"-Eigenschaft wird so auf das Substrat 16 gelegt, daß auch die Kantenflächen des Substrates (zusätzlich zur eigentlichen Oberfläche des Substrates) abgedeckt werden können. Über den Träger 10 wird dann ein Silikon-Tuch 32 gelegt und es erfolgt sodann eine Ansaugung des Silikon-Tuches 32 derart, daß der gesamte Träger 10 auch im Bereich der Kantenflächen satt und vollständig an das Substrat 16 angedrückt wird. Daneben wird in gewünschter Weise Temperatur erzeugt und es erfolgt ein Übertrag der Farbschichten bzw. Lackschichten vom Träger 10 auf das Substrat 16, analog der oben beschriebenen Technik.

## Patentansprüche

1. Verfahren zum Auftragen eines Farbdekors (12) auf ein Substrat (16) mit zumindest folgenden Schritten:
a) ein Farbdekor (12) mit diffundierbaren Dispersionsfarbstoffen wird auf einen flächigen Träger (10) mit "release"-Eigenschaft aufgebracht,
b) über das auf den Träger (10) aufgebrachte Farbdekor wird ein Lack (14) aufgetragen,
c) der aufgetragene Lack (14) wird teilvernetzt,
d) unter Druck und/oder erhöhter Temperatur wird der teilvernetzte Lack (14) mitsamt dem Farbdekor (12) vom Träger (10) auf das Substrat (16) so übertragen, daß der Lack unter dem Farbdekor auf dem Substrat aufliegt und der Träger (10) vom Farbdekor (12) entfernt ist, und
e) es wird eine weitere Vernetzung des Lackes (14) auf dem Substrat (16) durchgeführt.

2. Verfahren zum Auftragen von Lack (14) auf ein Holz zumindest als Bestandteil aufweisendes Substrat (16) oder auf ein Kunststoffsubstrat mit zumindest folgenden Schritten:
a) Lack wird auf einen flächigen Träger (10) mit "release"-Eigenschaft aufgetragen,
b) der aufgetragene Lack (14) wird auf dem Träger (10) teilvernetzt,
c) der teilvernetzte Lack wird vom Träger (10) auf das Substrat (16) übertragen, gegebenenfalls unter Druck und/oder erhöhter Temperatur,
d) der auf das Substrat übertragene Lack wird vollvernetzt.

3. Verfahren zum Auftragen eines Farbdekors auf ein Substrat mit zumindest folgenden Schritten:
a) eine erste Lackschicht (14a) wird auf einen flächigen Träger (10) mit "release"-Eigenschaft aufgetragen,
b) die erste Lackschicht (14a) wird teilvernetzt,
c) auf die teilvernetzte erste Lackschicht wird ein Farbdekor (12) aufgebracht,
d) auf das Farbdekor (12) wird eine Zweite Lackschicht (14b) aufgetragen und ebenfalls teilvernetzt,
e) unter Druck und/oder erhöhter Temperatur werden die teilvernetzten Lackschichten mitsamt dem Farbdekor vom Träger (10) auf das Substrat (16) überführt,
f) auf dem Substrat (16) werden die ersten und zweiten Lackschichten (14a, 14b) vollvernetzt.

4. Verfahren zum Auftragen eines Farbdekors auf ein Substrat mit zumindest folgenden Schritten:
a) ein Lack (14) wird auf einen flächigen Träger (10) mit "release"-Eigenschaft aufgetragen,
b) der Lack (14) wird teilvernetzt,
c) auf den teilvernetzten Lack wird Farbdekor (12) aufgebracht,
d) unter Druck und/oder erhöhter Temperatur wird der teilvernetzte Lack mitsamt dem Farbdekor vom Träger (10) auf das Substrat (16) so übertragen, daß das Farbdekor unter dem Lack auf dem Substrat liegt,
e) es wird eine weitere Vernetzung des Lackes durchgeführt.

5. Verfahren nach einem der Ansprüche 1, 3 oder 4,
dadurch **gekennzeichnet,** daß als Substrat eine Kunststoffbahn verwendet wird, insbesondere ein Thermoplast.

6. Verfahren nach einem der vorhergehenden Ansprüche,
dadurch **gekennzeichnet,** daß die Übertragung des teilvernetzten Lackes und gegebenenfalls des Farbdekors unter Druck und erhöhter Temperatur vom Träger auf das Substrat mittels eines Kalanders durchgeführt wird, der insbesondere zumindest eine Walze aus elastischem Material aufweist.

7. Verfahren nach Anspruch 6,
dadurch **gekennzeichnet,** daß das Substrat und der Träger synchron durch den Kalander geführt werden.

8. Verfahren nach einem der vorhergehenden Ansprüche,
dadurch **gekennzeichnet,** daß als Träger mit "release"-Eigenschaft ein Papier Verwendet wird.

9. Verfahren nach einem der Ansprüche 1 bis 7,
dadurch **gekennzeichnet,** daß als Träger mit "release"-Eigenschaft eine Kunststoffolie verwendet wird.

10. Verfahren nach Anspruch 3,
dadurch **gekennzeichnet,** daß die erste Lackschicht aus einem Klarlack und die zweite Lackschicht aus einem weiß gefärbten Lack bestehen.

## Claims

1. Method of applying a coloured decoration (12) onto a substrate (16), said method having at least the following steps:
a) a coloured decoration (12) made of diffusible disperse dyes is applied onto a sheet-type carrier (10) having "release" properties,
b) a lacquer (14) is applied onto the coloured decoration applied onto the carrier (10),
c) the applied lacquer (14) is partially crosslinked,
d) the partially crosslinked lacquer (14), together with the coloured decoration (12), is transferred from the carrier (10) to the substrate (16) under pressure and/or increased temperature, in such a manner that the lacquer will bear on the substrate while underlying the coloured decoration, and that the carrier (10) is remote from the coloured decoration (12), and
e) a further crosslinking of the lacquer (14) on the substrate (16) is carried out.

2. Method of applying lacquer (14) onto a substrate (16) having wood as at least a constituent part of it or onto a substrate of plastic materials, said method having at least the following steps:
a) a lacquer is applied onto a sheet-type carrier (10) having "release" properties,
b) the applied lacquer (14) is partially crosslinked on the carrier (10),
c) the partially crosslinked lacquer is transferred from the carrier (10) to the substrate (16), if necessary, under pressure and/or increased temperature,
d) the lacquer transferred to the substrate is fully crosslinked.

3. Method of applying a coloured decoration onto a substrate, said method having at least the following steps:
a) a first lacquer layer (14a) is applied onto a sheet-type carrier (10) having "release" properties,
b) the first lacquer layer (14a) is partially crosslinked,
c) a coloured decoration (12) is applied onto the partially crosslinked first lacquer layer,
d) a second lacquer layer (14b) is applied onto the coloured decoration (12) and is also partially crosslinked,
e) the partially crosslinked lacquer layers, together with the coloured decoration, are transferred to the substrate (16) under pressure and/or increased temperature,
f) the first and the second lacquer layers (14a, 14b) are fully crosslinked while being on the substrate (16).

4. Method of applying a coloured decoration onto a substrate, said method having at least the following steps:
a) a lacquer (14) is applied onto a sheet-type carrier (10) having "release" properties,
b) the lacquer (14) is partially crosslinked,
c) a coloured decoration (12) is applied onto the partially crosslinked lacquer,
d) the partially crosslinked lacquer, together with the coloured decoration, is transferred from the carrier (10) to the substrate (16) under pressure and/or increased temperature, in such a manner that the coloured decoration bears on the substrate while underlying the lacquer,
e) a further crosslinking of the lacquer is carried out.

5. Method according to any of claims 1, 3 or 4,
**characterized** in that a web of plastics material, more particularly a thermoplastic material is used as a substrate.

6. Method according to any of the preceding claims,
**characterized** in that the transfer of the partially crosslinked lacquer and, if applicable, the coloured decoration under pressure and increased temperature from the carrier to the substrate is carried out by means of a calender which, more particularly, is provided with at least one roller made of resilient material.

7. Method according to claim 6,
**characterized** in that the substrate and the carrier are fed through the calender in a synchronous manner.

8. Method according to any of the preceding claims,
**characterized** in that paper is used as a carrier having "release" properties.

9. Method according to any of claims 1 through 7,
**characterized** in that a sheet of plastic material is used as a carrier having "release" properties.

10. Method according to claim 3,
**characterized** in that the first lacquer layer consists of a clear lacquer, and in that the second lacquer layer consists of a lacquer dyed white.

## Revendications

1. Procédé pour appliquer un décor coloré (12) sur un substrat (16) comportant au moins les étapes suivantes :
a) un décor coloré (12) comportant des colorants de dispersion diffusibles est appliqué sur un support plan (10) présentant des propriétés de "release",
b) un vernis (14) est appliqué sur le décor coloré appliqué sur le support (10),
c) le vernis (14) appliqué est réticulé partiellement,
d) le vernis partiellement réticulé (14) est transféré sous pression et/ou à température augmentée en même temps que le décor coloré (12) du support (10) sur le substrat (16) de telle manière que le vernis repose sur le substrat sous le décor coloré et que le support (10) est séparé du décor coloré (12), et
e) une réticulation supplémentaire du vernis (14) est réalisée sur le substrat (16).

2. Procédé pour appliquer un vernis (14) sur un substrat (16) comportant au moins du bois comme constituant ou sur un substrat en matière synthétique présentant au moins les étapes suivantes :
a) un vernis est appliqué sur un support plan (10) ayant des propriétés de "release",
b) le vernis (14) appliqué est réticulé partiellement sur le support (10),
c) le vernis partiellement réticulé est transféré du support (10) sur le substrat (16), éventuellement sous pression et/ou à température augmentée,
d) le vernis transféré sur le substrat est réticulé totalement.

3. Procédé pour appliquer un décor coloré sur un substrat comportant au moins les étapes suivantes :
a) une première couche de vernis (14a) est appliquée sur un substrat plan (10) ayant des propriétés de "release",
b) la première couche de vernis (14a) est réticulée partiellement,
c) un décor coloré (12) est appliqué sur la première couche de vernis partiellement réticulée,
d) une seconde couche de vernis (14b) est appliquée et éventuellement réticulée partiellement sur le décor coloré (12),
e) les couches de vernis partiellement réticulées sont transférées sous pression et/ou à température augmentée en même temps que le décor coloré du support (10) sur le substrat (16),
f) les première et deuxième couches de vernis (14a, 14b) sont totalement réticulées sur le substrat (16).

4. Procédé pour appliquer un décor coloré sur un substrat comportant au moins les étapes suivantes :
a) un vernis (14) est appliqué sur un support plan (10) ayant des propriétés de "release",
b) le vernis (14) est partiellement réticulé,
c) un décor coloré (12) est appliqué sur le vernis partiellement réticulé,
d) le vernis partiellement réticulé est transféré sous pression et/ou à température augmentée en même temps que le décor coloré du support (10) sur le substrat (16) de telle manière que le décor coloré est situé sur le substrat sous le vernis,
e) une réticulation supplémentaire du vernis est réalisée.

5. Procédé selon l'une des revendications 1, 3 ou 4, caractérisé en ce que l'on utilise comme substrat une bande de matière synthétique, en particulier une matière thermoplastique.

6. Procédé selon l'une des revendications précédentes, caractérisé en ce que le transfert du vernis partiellement réticulé et éventuellement du décor coloré sous pression et à température augmentée du support sur le substrat est réalisé au moyen d'une calandre qui comporte en particulier au moins un cylindre en matériau élastique.

7. Procédé selon la revendication 6, caractérisé en ce que le substrat et le support sont introduits de manière synchrone dans la calandre.

8. Procédé selon l'une des revendications précédentes, caractérisé en ce que l'on utilise comme support à propriétés de "release" un papier.

9. Procédé selon l'une des revendications 1 à 7, caractérisé en ce que l'on utilise comme support à propriétés de "release" une feuille de matière synthétique.

10. Procédé selon la revendication 3, caractérisé en ce que la première couche de vernis consiste en un vernis incolore et la seconde couche de vernis consiste en un vernis coloré en blanc.
